Europäisches Patentamt

(19) European Patent Office

Office européen des brevets

(11) Publication number: **0 100 954**
**A2**

# (12) EUROPEAN PATENT APPLICATION

(21) Application number: **83107282.2**

(22) Date of filing: **25.07.83**

(51) Int. Cl.³: **B 28 B 11/00**

(30) Priority: **13.08.82 IT 2283882**

(43) Date of publication of application:
**22.02.84 Bulletin 84/8**

(84) Designated Contracting States:
**AT BE CH DE FR GB LI LU NL SE**

(71) Applicant: **NUOVE INDUSTRIE CERAMICHE CEDIT S.p.A.**
**Via Zurigo 28/2**
**I-20147 Milano(IT)**

(72) Inventor: **Tilche, Paolo**
**P.zza della Repubblica, 7**
**I-20121 Milano(IT)**

(74) Representative: **Vatti, Paolo, Dr. Ing. et al,**
**Fumero - Studio Consulenza Brevetti**
**Widenmayerstrasse 4/1**
**D-8000 München 22(DE)**

(54) Process for the production of differently designed ceramic paving tiles and tile obtained thereby.

(57) Process for the production of differently designated ceramic tiles, comprising the step of showering appropriately selected vitreous bodies over the entire surface of the tiles, after having previously applied thereon an ordinary priming layer of spreaded enamel and a pattern of special enamel, and the step of directing a blow of skimming air to remove from the tiles the vitreous bodies arranged on the areas of said tiles whereon said special enamel has not been applied, the remaining previous and following steps of the process being those typical of the conventional processes for the production of enamelled ceramic tiles.

EP 0 100 954 A2

Croydon Printing Company Ltd.

"PROCESS FOR THE PRODUCTION OF DIFFERENTLY DESIGNED CERAMIC PAVING TILES AND TILE OBTAINED THEREBY"

=== oOo ===

The present invention relates to an improved process for the production of ceramic paving tiles, allowing to obtain tiles having special decorative effects. The present invention also refers to the ceramic paving tiles obtained with said process.

As known, the ceramic tiles designed to form linings in the building field are commonly produced starting from a ceramic biscuit onto which are applied, with various techniques, one or more layers of one or more enamels having equal or different characteristics and colours over the entire surface of the tile or over selected parts thereof, so as to obtain the desired design or decoration on said tile, the product being then subjected to baking in order to dry the enamel or enamels and bind them firmly to the biscuit.

On the basis of this technique, an infinite number of ornamental and decorative compositions have been carried out in the past, over a wide variety of types, shapes and dimensions of ceramic tiles, with appropriate variants in the execution during the various stages of the manufacturing process.

However, all these tiles have the common characteristic of being typical series products, all the patterns being exactly alike for each design or decoration. This is not surprising, considering the highly industrialized technique adopted for the production of the tiles, and even the public is perfectly accustomed to walls lined with tiles being all alike or, at the best, of two or three types, designed to obtain some more elaborate decorative combination. But it is equally evident that there should be an interest in producing, at an industrial rate, tiles having a degree of individuality such as to be compared to a product pertaining to handicraft, and to allow to obtain more strongly personalized linings, capable of meeting the favour of the more qualified public.

- 2 -

0100954

The present invention provides a technically original and decoratively most valid solution to the problem of the industrial production of differently designed ceramic paving tiles, in that it concerns a process which introduces in an ordinary process for the production of enamelled ceramic tiles, the step of applying onto the enamel laid on the biscuit of the tiles, a plurality of solid vitreous bodies arranged according to a pre-established pattern. According to said process, the vitreous bodies are showered over the entire surface of the tiles after having previously applied over their ordinary priming layer of spreaded enamel, a pattern of special enamel apt to retain said bodies, and then having promptly directed on said tiles a light but consistent skimming blow of air, to remove the vitreous bodies from the surface areas of the tiles whereon the special enamel has not been applied; subsequently, the tiles are subjected to baking and to the other normal operations of the conventional manufacturing process, so as to obtain - by baking - the incorporation of said vitreous bodies into the enamelled lining of the biscuit.

According to this process, the special enamel to retain the vitreous bodies is preferably applied by a silk-screen technique, and said vitreous bodies can be of any type, but they are generally of small dimensions as, for example, glass chips, glass beads, glass bits or the like.

The invention also relates to the ceramic tiles produced with the aforespecified process.

As already mentioned, the process according to the invention is included into an ordinary process for the production of ceramic tiles (which is presumably considered to be known in all its details) subsequently to the step wherein the biscuits for the tiles, suitably treated and conditioned, have been covered with a layer of ordinary priming spreaded enamel. According to the invention, one provides at this point for the application, by a silk-screen process and according to a desired pattern, of a special liquid enamel of a type which is apt to retain on the tiles small glass chips, glass beads, glass bits or the like. Thus, after this application, the tiles appear with their whole surface covered with the already dried spreaded enamel, and with some patterned areas covered furthermore with the special enamel, silk-screen applied, still in a liquid state. According to the invention, the heretofore specified small vitreous bodies, suit-. ably prepared previously, are now abundantly dropped, as a shower, over the entire surface of the tiles. Such bodies preferably consist of chips obtained through a selection of equally coloured and differently meltable vitreous bodies, by crushing of said vitreous bodies into hammer mills and/or crushing rolls, by sieving of the crushed product thus obtained and selection of different granulometric fractions and by the mixing of granulometric selections, having a colour and/or an attitude to fuse suitably chosen according to the result one wishes to obtain. Alternatively, one may use glass beads (spheroid bodies obtained by machining short sections or small pierced glass rods) and glass bits (small pieces of solid glass), also selected as far as quality and colours, or still other small vitreous bodies.

Once the tiles are completely covered with said vitreous bodies, a light but consistent blow 'of skimming air is directed onto the tiles: the bodies having deposited on the surface areas of the tiles merely lined with the dry priming layer of spreaded enamel are thereby easily and entirely removed from the tile surfaces, onto which continue instead to adhere most of the vitreous bodies having deposited on the surface areas lined also with the still liquid special enamel, namely, on the patterned areas of the tile surfaces.

There follows the ordinary baking stage, during which the vitreous bodies left on the tiles extend and flatten out to an extent depending on their size, shape and meltability, so as to finally become incorporated with the enamel and form therewith a very particular decoration.

In this decoration – thanks to the processing method used – while the general design, namely the arrangement of the vitreous bodies onto the tiles, is constant and thus equal for all the tiles onto which a certain silk-screen application of the special enamel has been carried out, the shape and size of the single incorporated vitreous bodies appear to be different from tile to tile; this is due both to the differences existing in the material employed (the vitreous bodies are never alike, on account of the manner in which they are produced), and to the differences deriving from the fact that each vitreous body incorporates in a different way into the liquid enamel spread over the biscuit and from the fact that each vitreous body reacts differently to the baking treatment, and finally to the differences arising from the selection or casualness of the colours of said bodies and of their proportions.

One thereby obtains the result of producing tiles which appear, for various aspects, one different from the other, as if they had been produced by handicraft. The result is evident even in the case of using vitreous bodies all of the same colour because, as said, there is variation in the size and shape of the incorporated inserts created by said bodies. But it becomes exceptional when using vitreous bodies of different colours. In this case, the author of the decoration may select a certain number of colours of the vitreous bodies to obtain a certain basic chromatism, and the vitreous bodies of these colours may then be mixed at random, or in certain proportions, to be distributed on the tiles. Thus, as well as the shapes and dimentions of the vitreous inserts on the finished tile, also the arrangement, number and combinations of colours can vary from one specimen to the other, so that is becomes practically impossible – even in series and mass productions – to obtain two identical tiles, while it is possible to realize widely varied and sparkling chromatic effects, producing very appealing results.

## CLAIMS

1) Process for the production of ceramic tiles, which introduces in an ordinary manufacturing process of enamelled ceramic tiles the step of applying onto the enamel laid on the biscuit of the tiles a plurality of solid vitreous bodies arranged according to a pre-established pattern, characterized in that, said vitreous bodies are showered over the entire surface of the tiles, after having previously applied over their ordinary priming layer of spreded enamel a pattern of special enamel apt to retain said bodies, and in that, a light but consistent blow of skimming air is then promptly directed on said tiles to remove the vitreous bodies from the surface areas of the tiles whereon said special enamel has not been applied, the tiles being subsequently subjected to baking and to the other normal operations of the conventional manufacturing process.

2) A process as in claim 1), wherein the special enamel, apt to retain the vitreous bodies, is applied according to a silk-screen technique.

3) A process as in claims 1) and 2), wherein said vitreous bodies are of small dimensions.

4) A process as in claims 1) to 3), wherein said vitreous bodies consist of glass chips obtained through a selection of equally coloured and differently meltable vitreous bodies, by crushing of said vitreous bodies into hammer mills and/or crushing rolls, by sieving of the crushed product and selection of different granulometric fractions and by the mixing of granulometric selections, having a suitably selected colour and/or attitude to fuse.

5) A process as in claims 1) to 3), wherein said vitreous bodies are glass beads.

6) A process as in claims 1) to 3), wherein said vitreous bodies are glass bits.

7) Ceramic paving tiles produced with the process according to claims 1) to 3).